# EUROPEAN PATENT APPLICATION

(11) **EP 4 257 624 A1**
(43) Date of publication of application: **11.10.2023**
(21) Application number: 21900580.8
(22) Date of filing: 30.11.2021
(51) Int. Cl.: C08F 290/14, C08G 59/40, C08L 21/00, C08L 51/00, C08L 67/06, C08L 75/04, C08L 101/00, C08L 63/00, C08J 5/10

(54) **FIBER-REINFORCED PULTRUSION-MOLDED ARTICLE**

(30) Priority: 02.12.2020 JP 2020200000
(71) Applicant: Toray Industries, Inc., Tokyo 103-8666 (JP)
(72) Inventor: OKA, Hideki, Nagoya-shi, Aichi 455-8502 (JP); TAKENAKA, Aki, Nagoya-shi, Aichi 455-8502 (JP); MATSUMOTO, Kenji, Nagoya-shi, Aichi 455-8502 (JP)
(74) Representative: Mewburn Ellis LLP
(86) International application number: PCT/JP2021/043774
(87) International publication number: WO 2022/118827

(57) **Abstract**

The major object is to provide a method to produce a fiber-reinforced pultrusion molded article with improved physical properties in a process in which a resin impregnated fiber base material containing a reinforcing fiber bundle assembly impregnated with a thermosetting resin composition is prepared and the thermosetting resin composition is heated and cured to achieve pultrusion molding thereof into an appropriate shape to provide a fiber-reinforced pultrusion molded article. A fiber-reinforced pultrusion molded article characterized by being produced by impregnating a reinforcing fiber bundle assembly containing a plurality of reinforcing fiber bundles bound together with a resin composition containing at least a thermosetting resin composition as the components [A] and a toughness improving agent as the components [B], followed by curing it.

## Description

### TECHNICAL FIELD

The present invention relates to a fiber-reinforced pultrusion molded article containing a resin composition that is produced by pultrusion molding.

### BACKGROUND ART

Having good properties such as corrosion resistance as well as mechanical properties including strength and stiffness, in spite of being lightweight, fiber-reinforced resin, which consists mainly of a reinforcing fiber, such as carbon fiber and glass fiber, and a thermosetting resin, such as epoxy resin, phenolic resin, and vinyl ester resin, have been used in a wide variety of fields including aerospace, automobiles, railway vehicles, ships, civil engineering, construction, and sports goods. In particular, fiber-reinforced resins containing continuous reinforcing fibers have been used for applications that require high performance. Carbon fibers, which are high in specific strength and specific elastic modulus, and thermosetting resins have been used frequently as reinforcing fibers and matrix resins, respectively.

To produce fiber-reinforced resins, available methods include the prepreg molding method, hand lay-up method, filament winding method, pultrusion molding (pultrusion) method, and RTM (resin transfer molding) method, and an appropriate one is selected from among them.

In the pultrusion molding method, reinforcing fiber bundles containing several thousands to several tens of thousands of filaments aligned in one direction are passed through a resin bath containing a liquid-state matrix resin to impregnate the reinforcing fiber bundles with the matrix resin. Then, the reinforcing fiber bundles of impregnated with the matrix resin are cured as they are pultruded continuously by a take-up machine through a squeeze die and heated mold.

To produce a molded article with high productivity by the pultrusion method, it is important to perform this process continuously and steadily. In addition, to pultrude a molded article with a smooth surface easily from a mold, it is necessary to allow the resin in the impregnated reinforcing fiber bundles to be in contact with the mold or press them against the mold by an appropriate pressure until it is cured sufficiently.

The thermosetting matrix resin composition to use for pultrusion molding is required to be so low in viscosity that the reinforcing fiber can be impregnated quickly in the resin impregnation tank, and stable viscosity retention is also an important factor from the viewpoint of prolonged continuous production. In addition, there are increasing demands for pultrusion molded articles with enhanced characteristics and for example, increased heat resistance and interlaminar fracture toughness are being called for in some fields.

To realize these required properties, Patent document 1 discloses a resin composition that includes 60 to 100 parts by mass of an aminophenol type epoxy resin as essential component relative to 100 parts by mass of the entire epoxy resin composition, a combination of an acid anhydride having a structure of a nadic acid anhydride and an acid anhydride having a structure of a hydride of a phthalic acid anhydride as acid anhydride component, a specific filler substance with a Mohs hardness of 3 or less as filler component, and a mold release agent. The document also discloses a fiber-reinforced molded article that is produced by using this epoxy resin composition to impregnate a reinforcing fiber bundle assembly prepared by binding reinforcing fiber bundles and heat-curing the epoxy resin composition while passing them through a pultrusion molding zone, thereby pultruding it into an intended shape. Based on this, the present invention provides a means of high speed continuous pultrusion molding that is realized by suppressing the generation of resin residues adhered to the inner wall of the mold, thereby serving to produce a fiber-reinforced pultrusion molded article with high heat resistance.

### PRIOR ART DOCUMENTS

### PATENT DOCUMENTS

Patent document 1: International Publication WO 2019/151174

### SUMMARY OF INVENTION

### PROBLEMS TO BE SOLVED BY THE INVENTION

Although the invention proposed in the Patent document 1 serves to suppress the generation of resin residues adhered to the inner wall of the mold in a pultrusion molding process, it is still unable to produce a fiber-reinforced pultrusion molded article having better properties, in regard to interlaminar fracture toughness in particular, than the conventional products.

In view of these problems with the conventional techniques, the main object of the present invention is to provide an improved pultrusion molding process to produce a fiber-reinforced pultrusion molded article having improved properties including toughness.

### MEANS OF SOLVING THE PROBLEMS

To solve the problems, the fiber-reinforced molded article according to the present invention has the following constitution. Specifically, a fiber-reinforced pultrusion molded article characterized by being produced by impregnating a reinforcing fiber bundle assembly containing a plurality of reinforcing fiber bundles bound together with a resin composition containing at least the components [A] and [B] specified below, followed by curing it.
component [A]: thermosetting resin composition
component [B]: toughness improving agent
According to a preferred embodiment of the present invention, the thermosetting resin composition used as the component [A] is at least one thermosetting resin composition selected from the group consisting of epoxy resin composition, vinyl ester resin composition, unsaturated polyester resin composition, and polyurethane resin composition.

According to a preferred embodiment of the present invention, the toughness improving agent used as the component [B] is at least one toughness improving agent selected from the group consisting of liquid rubber, core shell particle, and rubber particle.

According to a preferred embodiment of the present invention, the thermosetting resin composition used as the component [A] is an epoxy resin composition containing at least the components [a1] to [a3] specified below.

component [a1]: epoxy resin that is in a liquid state at room temperature
component [a2]: curing agent
component [a3]: curing accelerator
According to a preferred embodiment of the present invention, the epoxy resin that is in a liquid state at room temperature, i.e. the component [a1] of the epoxy resin composition, is at least one epoxy resin selected from the bisphenol type epoxy resins.

According to a preferred embodiment of the present invention, the curing agent used as the component [a2] of the epoxy resin composition is an acid anhydride having an alicyclic structure that is in a liquid state at room temperature.

According to a preferred embodiment of the present invention, the curing accelerator used as the component [a3] of the epoxy resin composition is at least one selected from the group consisting of quaternary ammonium salts, imidazole derivatives, and organic phosphorus compounds.

According to a preferred embodiment of the present invention, the curing accelerator used as the component [a3] of the epoxy resin composition accounts for 1 to 10 parts by mass relative to 100 parts by mass of the component [a1].

According to a preferred embodiment of the present invention, the thermosetting resin composition used as the component [A] is a vinyl ester resin composition containing at least the components [b1] to [b3] specified below.

component [b1]: vinyl ester resin
component [b2]: reactive diluent
component [b3]: polymerization initiator
According to a preferred embodiment of the present invention, the ratio by mass between the vinyl ester resin used as the component [b1] and the reactive diluent used as the component [b2] of the vinyl ester resin composition is 40:60 to 60:40.

According to a preferred embodiment of the present invention, the reactive diluent used as the component [b2] of the vinyl ester resin composition is styrene.

According to a preferred embodiment of the present invention, the polymerization initiator used as the component [b3] of the vinyl ester resin composition is an organic peroxide based polymerization initiator.

According to a preferred embodiment of the present invention, the toughness improving agent used as the component [B] of the resin composition accounts for 2 to 30 parts by mass relative to 100 parts by mass of the component [A].

According to a preferred embodiment of the present invention, the reinforcing fiber is carbon fiber.

### ADVANTAGEOUS EFFECTS OF THE INVENTION

For a pultrusion molding process in which a fiber-reinforced molded article is produced by impregnating a reinforcing fiber with an epoxy resin composition, the constitution described above serves to provide a fiber-reinforced pultrusion molded article having improved properties including interlaminar fracture toughness.

### BRIEF DESCRIPTION OF THE DRAWINGS

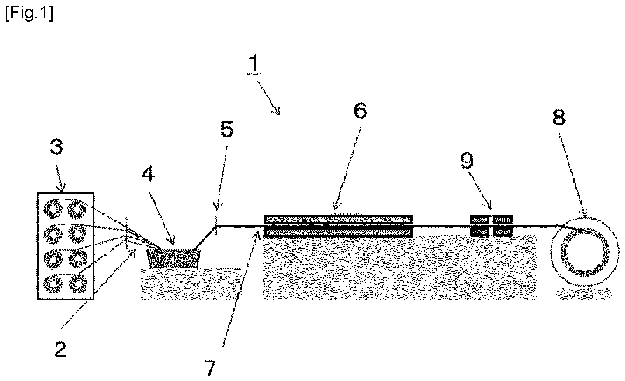

[Fig. 1] This gives a schematic diagram of a pultrusion molding process for producing a fiber-reinforced pultrusion molded article according to the present invention.

### DESCRIPTION OF PREFERRED EMBODIMENTS

The embodiments of the present invention are described below.

The fiber-reinforced pultrusion molded article according to the present invention is characterized by being produced by impregnating a reinforcing fiber bundle assembly containing a plurality of reinforcing fiber bundles bound together with a resin composition containing at least the components [A] and [B] specified below, followed by curing it.

component [A]: thermosetting resin composition
component [B]: toughness improving agent
The cured product of the resin composition that includes the thermosetting resin composition used as the component [A] and the toughness improving agent used as the component [B] acts as matrix resin in the resulting fiber-reinforced pultrusion molded article. In this way, the matrix resin in the fiber-reinforced pultrusion molded article according to the present invention is a cured product of a thermosetting resin, and this cured product of a thermosetting resin has a three dimensional crosslinked structure and accordingly has a chemical structure difficult to determine. Therefore, its structural features are inferred from the resin composition that is available before the curing step.

For the present invention, a thermosetting resin is defined as a compound having a plurality of polymerizable functional groups in one molecule. For example, a compound having a plurality of epoxy groups in one molecule is referred to as epoxy resin; an ester compound produced from an addition reaction product of an epoxy resin and an unsaturated monobasic acid as principal chain compound and having a plurality of vinyl groups in one molecule is referred to as vinyl ester resin; an ester compound having a condensed ester produced from a dibasic acid containing an unsaturated acid and a glycol as principal chain and having a plurality of unsaturated bonds in one molecule is referred to as an unsaturated polyester resin; and a compound having a plurality of isocyanate groups in one molecule is referred to as a polyurethane resin. For each thermosetting resin, furthermore, a mixture of components necessary for polymerization or curing reaction is referred to as epoxy resin composition, vinyl ester resin composition, unsaturated polyester resin composition, or polyurethane resin composition. In addition, the material resulting from the polymerization or curing reaction of each thermosetting resin composition is referred to as cured epoxy resin, cured vinyl ester resin, cured unsaturated polyester resin, or cured polyurethane resin (hereinafter they will be occasionally referred to as cured thermosetting resins, cured resins, or cured products).

For the present invention, it is essential for the resin composition to include the component [A], i.e., a thermosetting resin composition, and the component [B], i.e., a toughness improving agent.

For the present invention, it is preferable from the viewpoint of handleability that the thermosetting resin composition used as the component [A] be at least one thermosetting resin composition selected from the group consisting of epoxy resin composition, vinyl ester resin composition, unsaturated polyester resin composition, and polyurethane resin composition, of which the epoxy resin composition and the vinyl ester resin composition are more preferable from the viewpoint of properties of the resulting molded articles. Furthermore, each of these thermosetting resin compositions may not be contained singly, and for example, a mixture of a plurality thereof, such as a mixture of a vinyl ester resin composition and an unsaturated polyester resin composition, may also be used.

For the present invention, an epoxy resin composition usable as the component [A] preferably contains at least the component [a1], i.e., an epoxy resin that is in a liquid state at room temperature, the component [a2], i.e., a curing agent, and the component [a3], i.e., a curing accelerator.

The component [a1], i.e., an epoxy resin that is in a liquid state at room temperature, to be used in such a case is preferably in a liquid state at room temperature because it is favorable for impregnating reinforcing fibers. Specific examples of the component [a1], i.e. the epoxy resin that is in a liquid state at room temperature, include aromatic glycidyl ether obtainable from a phenol having a plurality of hydroxyl groups, aliphatic glycidyl ether obtainable from an alcohol having a plurality of hydroxyl groups, glycidyl amine obtainable from an amine, epoxy resin having an oxirane ring, and glycidyl ester obtainable from a carboxylic acid having a plurality of carboxyl groups.

Examples of the aromatic glycidyl ether that can be used as the component [a1] of the epoxy resin composition, i.e. the epoxy resin that is in a liquid state at room temperature, include diglycidyl ethers obtainable from bisphenols, such as diglycidyl ether of bisphenol A, diglycidyl ether of bisphenol F, diglycidyl ether of bisphenol AD, and diglycidyl ether of bisphenol S, polyglycidyl ether of novolac obtainable from phenols, alkyl phenols, etc., diglycidyl ether of resorcinol, diglycidyl ether of hydroquinone, diglycidyl ether of 4,4'-dihydroxybiphenyl, diglycidyl ether of 4,4'-dihydroxy-3,3',5,5'-tetramethyl biphenyl, diglycidyl ether of 1,6-dihydroxynaphthalene, diglycidyl ether of 9,9'-bis(4-hydroxyphenyl)fluorene, triglycidyl ether of tris(p-hydroxyphenyl)methane, tetraglycidyl ether of tetrakis(p-hydroxyphenyl)ethane, and diglycidyl ethers having oxazolidone skeletons that can be produced by reacting a diglycidyl ether of bisphenol A and a bifunctional isocyanate. Of these, the diglycidyl ethers of bisphenol compounds will be hereinafter referred to generically as bisphenol type epoxy resins.

Examples of the aliphatic glycidyl ether that can be used as the component [a1] of the epoxy resin composition, i.e. the epoxy resin that is in a liquid state at room temperature, include diglycidyl ether of ethylene glycol, diglycidyl ether of propylene glycol, diglycidyl ether of 1,4-butanediol, diglycidyl ether of 1,6-hexanediol, diglycidyl ether of neopentyl glycol, diglycidyl ether of cyclohexane dimethanol, diglycidyl ether of glycerin, triglycidyl ether of glycerin, diglycidyl ether of trimethylol ethane, triglycidyl ether of trimethylol ethane, diglycidyl ether of trimethylol propane, triglycidyl ether of trimethylol propane, tetraglycidyl ether of pentaerythritol, diglycidyl ether of dodecahydrobisphenol A, and diglycidyl ether of dodecahydrobisphenol F.

Examples of the glycidyl amine that can be used as the component [a1] of the epoxy resin composition, i.e. the epoxy resin that is in a liquid state at room temperature, include diglycidyl aniline, diglycidyl toluidine, triglycidyl aminophenol, tetraglycidyl diaminodiphenyl methane, and tetraglycidyl xylylene diamine, which may be halogen-substituted, alkyl-substituted, or hydrogenated.

Examples of the epoxy resin having an oxirane ring that can be used as the component [a1] of the epoxy resin composition, i.e. the epoxy resin that is in a liquid state at room temperature, include oligomers of vinylcyclohexene dioxide, dipentene dioxide, 3,4-epoxycyclohexylmethyl 3,4-epoxycyclohexanecarboxylate, bis(3,4-epoxycyclohexylmethyl) adipate, dicyclopentadiene dioxide, bis(2,3-epoxycyclopentyl) ether, and 4-vinylcyclohexene dioxide.

Examples of the diglycidyl ester that can be used as the component [a1] of the epoxy resin composition, i.e. the epoxy resin that is in a liquid state at room temperature, include phthalic acid diglycidyl ester, terephthalic acid diglycidyl ester, hexahydrophthalic acid diglycidyl ester, and dimer acid diglycidyl ester.

In particular, the use of an aromatic glycidyl ether is preferable as the component [a1] of the epoxy resin composition, i.e. the epoxy resin that is in a liquid state at room temperature, and it is more preferable to use at least one epoxy resin selected from the bisphenol type epoxy resins. These are preferable because of a good balance between the viscosity of the epoxy resin composition and the heat resistance and mechanical properties such as elastic modulus of the resulting pultrusion molded article.

For the bisphenol type epoxy resin, it is preferable that the number of repeating units be in the range of 0 to 0.2 and more preferably in the range of 0 to 0.1.
The number of repeating units is defined as shown in the chemical formula given below.

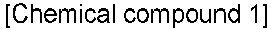

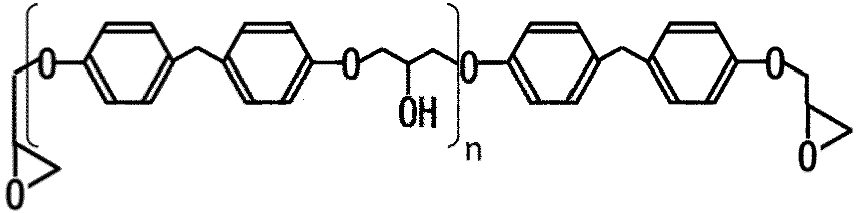

It corresponds to n in the chemical structural formula of bisphenol F type epoxy resin given above. If the number of repeating units is more than 0.2, the viscosity of the epoxy resin composition increases and accordingly, it is likely that the impregnation of the reinforcing fiber deteriorates and it leads to a fiber-reinforced composite material that is inferior in heat resistance.

In the case where the bisphenol type epoxy resin is a bisphenol F type epoxy resin, it is preferable that its epoxy equivalent weight be in the range of 160 to 180 and more preferably in the range of 165 to 177. The epoxy equivalent weight is related with the number of repeating units in such a manner that the former increases as the latter increases and that it decreases as the latter decreases. If the epoxy equivalent weight is less than 160, it suggests that low molecular weight impurities are likely to be contained, possibly leading to deterioration in surface quality due to their volatilization during the molding step. Furthermore, if the epoxy equivalent weight is more than 180, the viscosity of the epoxy resin composition increases and it is likely that the impregnation of the reinforcing fiber deteriorates and that it leads to a fiber-reinforced composite material that is inferior in stiffness.

There are no specific limitations on the curing agent used as the component [a2] of the epoxy resin composition as long as it acts as a curing agent for the epoxy resin, but it is preferably an acid anhydride. The acid anhydride is a compound that contains in one molecule one or more acid anhydride groups that are reactive to the epoxy groups present in the component [a1], i.e. the epoxy resin that is in a liquid state at room temperature, and it is preferably the carboxylic acid anhydride. It is preferable that four or less acid anhydride groups be present in one molecule.

The aforementioned acid anhydride may be an acid anhydride that has an aromatic ring but does not have an alicyclic structure, such as phthalic acid anhydride, or may be an acid anhydride that does not have either an aromatic ring or an alicyclic structure, such as succinic acid anhydride. However, from the viewpoint of handleability, it is preferably a liquid with low viscosity, and also from the viewpoint of heat resistance and mechanical property of cured products, it is more preferably an acid anhydride that has an alicyclic structure and is in a liquid state at room temperature, and in particular, it is more preferably a compound having a cycloalkane ring or a cycloalkene ring.

Specific examples of the aforementioned acid anhydride having an alicyclic structure include hexahydrophthalic acid anhydride, methylhexahydrophthalic acid anhydride, methyldihydronadic acid anhydride, 1,2,4,5-cyclopentanetetracarboxylic acid dianhydride, 1,2,3,6-tetrahydrophthalic acid anhydride, methyl-1,2,3,6-tetrahydrophthalic acid anhydride, nadic acid anhydride, methylnadic acid anhydride, bicyclo[2,2,2]oct-7-ene-2,3,5,6-tetracarboxylic acid dianhydride, and 4-(2,5-dioxotetrahydrofuran-3-yl)-3-methyl-1,2,5,6-tetrahydrophthalic acid anhydride. In particular, as the curing agent used as the component [a2] of the epoxy resin composition, the use of an acid anhydride selected from hexahydrophthalic acid anhydride, tetrahydrophthalic acid anhydride, nadic acid anhydride, and alkyl-substituted ones thereof is preferable because of a good balance between the viscosity of the epoxy resin composition and the heat resistance and mechanical properties such as elastic modulus of the cured product to be obtained. Even when an acid anhydride having an alicyclic structure is used as the curing agent of the component [a2], an acid anhydride that does not have an alicyclic structure may be included.

In the case where the component [a2] is an acid anhydride, the contents of the component [a1] and the component [a2] in the epoxy resin composition are preferably such that the ratio H/E between the number of acid anhydride groups (H) and the total number of epoxy groups (E) in the component [a1] is in the range of 0.5 to 1.5, more preferably in the range of 0.7 to 1.2, and still more preferably in the range of 0.9 to 1.1. The range may be between either of the aforementioned upper limits and either of the aforementioned lower limits. If the ratio H/E is less than 0.5, it may lead to a cured product having deteriorated properties because the resin composition is likely to be high in initial viscosity and fail to be cured sufficiently. If the ratio H/E is more than 1.5, the existence of an excessive amount of the curing agent component will cause a decrease in the concentration at the reaction point of the system and a decrease in the reaction speed and result in a cured product with deteriorated properties.

There are no specific limitations on the curing accelerator used as the component [a3] of the epoxy resin composition as long as it serves to promote the chemical reaction between the epoxy resin and the acid anhydride curing agent, but from the viewpoint of the balance between viscosity stability and heat resistance, it is preferable to use at least one selected from the group consisting of quaternary ammonium salts, imidazole derivatives, and organic phosphorus compounds.

Specific examples of a quaternary ammonium salt to use as the curing accelerator of the component [a3] of the epoxy resin composition include quaternary ammonium oxo acid salts produced from quaternary ammonium cation and oxo acid anion, quaternary ammonium halides produced from quaternary ammonium cation and anion of a substance of group 17 element, and quaternary ammonium borate salts produced from quaternary ammonium cation and borate anion that contains boron.

Examples of the quaternary ammonium oxo acid salts include tetramethylammonium perchlorate, tetramethylammonium sulfate, tetramethylammonium acetate, tetramethylammonium hydrogensulfate, tetraethylammonium nitrate, tetraethylammonium perchlorate, cetyltrimethylammonium perchlorate, hexadecyltrimethylammonium perchlorate, tetrabutylammonium perchlorate, tri-n-octylmethylammonium hydrogensulfate, tetrabutylammonium acetate, tetrabutylammonium hydrogensulfate, tetramethylammonium p-toluenesulfonate, tetraethylammonium p-toluenesulfonate, and tetrabutylammonium salicylate.

Examples of the quaternary ammonium halide include tetramethylammonium chloride, methyltriethylammonium chloride, tetraethylammonium chloride, tributylmethylammonium chloride, decyltrimethylammonium chloride, trimethyl-n-octylammonium chloride, lauryltrimethylammonium chloride, dodecyltrimethylammonium chloride, trimethyldodecylammonium chloride, trimethylmyristylammonium chloride, tetradecyltrimethylammonium chloride, trimethyltetradecylammonium chloride, tetrapropylammonium chloride, cetyltrimethylammonium chloride, hexadecyltrimethylammonium chloride, trimethyloctadecylammonium chloride, tri-n-octylmethylammonium chloride, dilauryldimethylammonium chloride, tetrabutylammonium chloride, dimethyldioctadecylammonium chloride, dimethyldistearylammonium chloride, tetrapentylammonium chloride, tetraamylammonium chloride, phenyltrimethylammonium chloride, benzyltrimethylammonium chloride, 1,1-dimethylpiperidinium chloride, phenylbenzyldimethylammonium chloride, phenyltriethylammonium chloride, benzyltriethylammonium chloride, benzyltributylammonium chloride, tetramethylammonium bromide, trimethylpropylammonium bromide, tetraethylammonium bromide, hexyltrimethylammonium bromide, decyltrimethylammonium bromide, trimethyl-n-octylammonium bromide, nonyltrimethylammonium bromide, lauryltrimethylammonium bromide, tetrapropylammonium bromide, myristyltrimethylammonium bromide, didecyldimethylammonium bromide, dimethyldioctylammonium bromide, cetyltrimethylammonium bromide, hexyldimethyloctylammonium bromide, trimethylheptadecylammonium bromide, trimethyloctadecylammonium bromide, trimethylstearylammonium bromide, didodecyldimethylammonium bromide, dimethylditetradodecylammonium bromide, tetrabutylammonium bromide, cetylethyldimethylammonium bromide, ethylhexadecyldimethylammonium bromide, dimethyldistearylammonium bromide, dihexadecyldimethylammonium bromide, tetrapentylammonium bromide, tetrahexylammonium bromide, tetraheptylammonium bromide, tetra(decyl)ammonium bromide, tetra-n-octylammonium bromide, phenyltrimethylammonium bromide, 1-butyl-1-methylpyrrolidinium bromide, benzyltrimethylammonium bromide, 1-butyl-1-methylpiperidinium bromide, 1-methyl-1-propylpiperidinium bromide, benzyltriethylammonium bromide, benzyldodecyldimethylammonium bromide, tributylbenzylammonium bromide, tetramethylammonium iodide, ethyltrimethylammonium iodide, tetraethylammonium iodide, ethyltripropylammonium iodide, tetrapropylammonium iodide, tetrabutylammonium iodide, dimethyldistearylammonium iodide, tetrahexylammonium iodide, tetrapentylammonium iodide, tetraheptylammonium iodide, tetra-n-octylammonium iodide, trimethylphenylammonium iodide, triethylphenylammonium iodide, and benzyltriethylammonium iodide.

Examples of the quaternary ammonium borate salt include tetramethylammonium tetrafluoroborate, triethylmethylammonium tetrafluoroborate, tetraethylammonium tetrafluoroborate, cetyltrimethylammonium tetrafluoroborate, hexadecyltrimethylammonium tetrafluoroborate, tetrabutylammonium tetrafluoroborate, 1-ethyl-1-methylpyrrolidinium tetrafluoroborate, and tetrabutylammonium tetraphenyl borate.

Of these, a quaternary ammonium halide is used preferably and quaternary ammonium bromide is used more preferably from the viewpoint of solubility in epoxy resins and curing agents and costs.

An imidazole derivative is a compound having an imidazole ring in the molecule. Specific examples of an imidazole derivative to use as the curing accelerator of the component [a3] of the epoxy resin composition include, but not limited to, imidazole, 1-methylimidazole, 2-methylimidazole, 2-ethylimidazole, 2-undecylimidazole, 2-heptadecylimidazole, 2-phenylimidazole, 1,2-dimethylimidazole, 2-ethyl-4-methylimidazole, 2-phenyl-4-methylimidazole, 1-benzyl-2-phenylimidazole, 1-benzyl-2-methylimidazole, 1-cyanoethyl-2-methylimidazole, 1-isobutyl-2-methylimidazole, and 1-aminoethyl-2-methylimidazole.

Of the various imidazole derivatives, furthermore, the use of an imidazole derivative having a substituent at the 1-position of the 5-membered ring is preferable because they are stability in terms of viscosity. In particular, an imidazole derivative that preferably has a melting point of 50°C or less, more preferably has a melting point of 25°C or less, and is in a liquid state at 25°C is used with the aim of allowing the epoxy resin composition to have a viscosity not higher than necessary. These imidazole derivatives may be used singly or as a combination of two or more thereof. Commercial products of imidazole derivatives having a substituent at the 1-position include 1,2DMZ (1,2-dimethylimidazole, manufactured by Shikoku Chemicals Corporation), 1B2MZ (1-benzyl-2-methyl imidazole, manufactured by Shikoku Chemicals Corporation), 1B2PZ (1-benzyl-2-phenyl imidazole, manufactured by Shikoku Chemicals Corporation), and DY070 (1-methyl imidazole, manufactured by Huntsman Advanced Materials).

Specific examples of an organic phosphorus compound to use as the curing accelerator of the component [a3] of the epoxy resin composition include tributylphosphine, trioctylphosphine, tricyclohexylphosphine, triphenylphosphine, tribenzylphosphine, tri-o-tolylphosphine, tri-m-tolylphosphine, tri-p-tolylphosphine, tris-(4-methoxyphenyl) phosphine, tris-(2,6-dimethoxyphenyl) phosphine, diphenyl cyclohexylphosphine, p-styryl diphenylphosphine, 1,2-bis(diphenylphosphino)ethane, 1,3-bis(diphenylphosphino)propane, 1,4-bis(diphenylphosphino)butane, tetraphenylphosphonium-tetraphenylborate, and triphenylphosphine-triphenylborane.

It is preferable for the curing accelerator used as the component [a3] of the epoxy resin composition to account for 1 to 10 parts by mass, more preferably 2 to 8 parts by mass, relative to 100 parts by mass of the component [a1]. If the component [a3] accounts for less than 1 part by mass, it is likely that a longer time will be required for its curing and that the resin will not be cured sufficiently in the mold, possibly leading to a pultrusion molded article that fails to have good properties. On the other hand, if the component [a3] accounts for more than 10 parts by mass, the time for which a low viscosity can be maintained becomes shorter and, in some cases, impregnation of the reinforcing fiber will be difficult.

In the case where a vinyl ester resin composition is used as the component [A] of the present invention, it is preferable for the vinyl ester resin composition to contain at least a vinyl ester resin as the component [b1], a reactive diluent as the component [b2], and a polymerization initiator as the component [b3].

The vinyl ester resin used as the component [b1] of the vinyl ester resin composition is a compound having reactive unsaturated groups only at chain ends, and it refers herein to an epoxy acrylate resin produced by reacting an epoxy resin with acrylic acid or an epoxy methacrylate resin produced by reacting an epoxy resin with methacrylic acid. Specifically, although there are no specific limitations on the type of epoxy resin to use as the material for producing the vinyl ester resin, but good examples include aromatic glycidyl ether obtainable from a phenol having a plurality of hydroxyl groups, aliphatic glycidyl ether obtainable from an alcohol having a plurality of hydroxyl groups, glycidyl amine obtainable from an amine, epoxy resin having an oxirane ring, and glycidyl ester obtainable from a carboxylic acid having a plurality of carboxyl groups.

Examples of an aromatic glycidyl ether useful as material for producing the vinyl ester resin used as the component [b1] of the vinyl ester resin composition include diglycidyl ethers obtainable from bisphenols such as diglycidyl ether of bisphenol A, diglycidyl ether of bisphenol F, diglycidyl ether of bisphenol AD, and diglycidyl ether of bisphenol S, polyglycidyl ether of novolac obtainable from phenols, alkyl phenol, etc., diglycidyl ether of resorcinol, diglycidyl ether of hydroquinone, diglycidyl ether of 4,4'-dihydroxybiphenyl, diglycidyl ether of 4,4'-dihydroxy-3,3',5,5'-tetramethyl biphenyl, diglycidyl ether of 1,6-dihydroxy naphthalene, diglycidyl ether of 9,9'-bis(4-hydroxyphenyl)fluorene, triglycidyl ether of tris(p-hydroxyphenyl)methane, tetraglycidyl ether of tetrakis(p-hydroxyphenyl)ethane, diglycidyl ethers having an oxazolidone skeleton obtained by reacting a diglycidyl ether of bisphenol A and a bifunctional isocyanate.

Examples of an aliphatic glycidyl ether useful as material for producing the vinyl ester resin used as the component [b1] of the vinyl ester resin composition include diglycidyl ether of ethylene glycol, diglycidyl ether of propylene glycol, diglycidyl ether of 1,4-butanediol, diglycidyl ether of 1,6-hexanediol, diglycidyl ether of neopentyl glycol, diglycidyl ether of cyclohexane dimethanol, diglycidyl ether of glycerol, triglycidyl ether of glycerol, diglycidyl ether of trimethylol ethane, triglycidyl ether of trimethylol ethane, diglycidyl ether of trimethylol propane, triglycidyl ether of trimethylol propane, tetraglycidyl ether of pentaerythritol, diglycidyl ether of dodecahydrobisphenol A, and diglycidyl ether of dodecahydrobisphenol F.

Examples of a glycidyl amine useful as material for producing the vinyl ester resin used as the component [b1] of the vinyl ester resin composition include diglycidyl aniline, diglycidyl toluidine, triglycidyl aminophenol, tetraglycidyl diaminodiphenyl methane, and tetraglycidyl xylylene diamine, which may be halogen-substituted, alkyl-substituted, or hydrogenated.

Examples of an epoxy resin having an oxirane ring useful as material for producing the vinyl ester resin used as the component [b1] of the vinyl ester resin composition include oligomers of vinylcyclohexene dioxide, dipentene dioxide, 3,4-epoxycyclohexylmethyl 3,4-epoxy cyclohexane carboxylate, bis(3,4-epoxycyclohexylmethyl)adipate, dicyclopentadiene dioxide, bis(2,3-epoxycyclopentyl) ether, and 4-vinylcyclohexene dioxide.

Examples of a glycidyl ester useful as material for producing the vinyl ester resin used as the component [b1] of the vinyl ester resin composition include phthalic acid diglycidyl ester, terephthalic acid diglycidyl ester, hexahydrophthalic acid diglycidyl ester, and dimer acid diglycidyl ester.

Among others, aromatic glycidyl ethers, particularly diglycidyl ethers of bisphenol compounds, namely, bisphenol type epoxy resins, and polyglycidyl ethers of novolacs, namely, phenol novolac type epoxy resins, are used preferably as material for producing the vinyl ester resin used as the component [b1] of the vinyl ester resin composition because they ensure a good balance between the viscosity of the expected vinyl ester resin composition and the mechanical property of the expected pultrusion molded article. Here, these epoxy resins may be used either singly or as a combination of two or more thereof. The aforementioned reaction between an epoxy resin and an acrylic acid or a methacrylic acid is preferably performed at 60°C to 140°C using an esterification catalyst. A polymerization inhibitor may be also used.

The ratio by mass between the component [b1] and the component [b2] in the vinyl ester resin composition is preferably in the range of 40:60 to 60:40 from the viewpoint of moldability and physical properties of the pultrusion molded article.

There are no specific limitations on the reactive diluent used as the component [b2] of the vinyl ester resin composition as long as it has an unsaturated group and is in a liquid state at room temperature. Examples thereof include monofunctional (meth)acrylate compounds such as methyl methacrylate, benzyl (meth)acrylate, phenoxyethyl (meth)acrylate, phenoxypolyethylene glycol (meth)acrylate, polyethylene glycol (meth)acrylate alkyl ether, polypropylene glycol (meth)acrylate alkyl ether, 2-ethylhexyl methacrylate, isodecyl (meth)acrylate, lauryl (meth)acrylate, isotridecyl (meth)acrylate, n-stearyl (meth)acrylate, tetrahydrofurfuryl methacrylate, isobornyl (meth)acrylate, dicyclopentenyloxyethyl (meth)acrylate, and dicyclopentanyl methacrylate; di(meth)acrylate compounds such as ethylene glycol di(meth)acrylate, propylene glycol di(meth)acrylate, 1,4-butanediol di(meth)acrylate, 1,3-butanediol di(meth)acrylate, neopentyl glycol di(meth)acrylate, 1,6-hexanediol di(meth)acrylate, bisphenol di(meth)acrylate, and 1,4-cyclohexanedimethanol di(meth)acrylate; and other such as diallyl phthalate, divinylbenzene, and styrene. In particular, unsaturated monomers having aromatic rings are preferable and styrene, benzyl methacrylate, and phenoxyethyl methacrylate are more preferable because of being able to form molded articles with high strength. Among others, styrene is particularly preferable from the viewpoint of handlability. Here, these unsaturated monomers may be used either singly or as a combination of two or more thereof to serve as the reactive diluent used as the component [b2] of the vinyl ester resin composition.

The vinyl ester resin composition includes the polymerization initiator used as the component [b3]. There are no specific limitations on the polymerization initiator used as the component [b3] of the vinyl ester resin composition, but for use in the molding step, it is preferable to adopt an organic peroxide based polymerization initiator that does not release a gas component, and examples thereof include diacyl peroxide compounds, peroxy ester compounds, hydroperoxide compounds, ketone peroxide compounds, alkyl perester compounds, percarbonate compounds, and peroxy ketals, of which an appropriate one may be selected to suite particular molding conditions. Here, these substances that serve as the component [b3] may be used either singly or as a combination of two or more thereof. It is preferable for the component [b3] to account for a proportion in the range of 0.3 to 3 mass% relative to the total quantity of the component [b1] and the component [b2] because it ensures good curing property and storage stability.

For the present invention, it is essential that the toughness improving agent used as the component [B] be included in the resin composition in order to ensure that the resulting pultrusion molded article according to the present invention has improved mechanical property. In general, a thermosetting resin shows a fracture behavior characteristic of so-called "brittle" material (brittle fracture) since the elongation of the resin decreases due to the three dimensional structure in the cured resin. Therefore, it is necessary to solve this problem of "brittleness" (low toughness), that is, to enhance the toughness.

There are no specific limitations on the type of the toughness improving agent used as the component [B] of the present invention, and examples thereof include elastomer modification agents and engineering plastics. Examples of the elastomer modification agents include liquid rubbers, core shell particles, rubber particles, silicone materials, and urethane prepolymers. Furthermore, examples of such engineering plastics include polyethersulfone, polysulfone, polyetherketone, and polyetherimide.

Among others, when applying to the production of a pultrusion molded article, the use of at least one toughness improving agent selected from the group consisting of liquid rubbers, core shell particles, and rubber particles is preferable from the viewpoint of allowing the resin composition to be low in viscosity, maintaining high mixability with the resin composition, and ensuring stable dispersion in the resin composition.

It is preferable for the toughness improving agent used as the component [B] of the resin composition for the present invention to account for 2 to 30 parts by mass, more preferably 5 to 20 parts by mass, relative to 100 parts by mass of the component [A]. The range may be between either of the aforementioned upper limits and either of the aforementioned lower limits. If it accounts for less than 2 parts by mass, a sufficiently high toughness will not be developed and the resulting cured product will have inferior physical properties. If it accounts for more than 30 parts by mass, furthermore, it will lead to an increase in resin viscosity as described later to cause defective impregnation of the reinforcing fiber and, in addition, result in a cured resin with inferior physical properties.

In a preferred embodiment, the components described above are mixed appropriately to ensure that the resin composition to use for the present invention has a viscosity at 25°C of 100 to 1,000 Pa s. This is because the pulling force required for the pultrusion molding of a fiber-reinforced composite material can be decreased if the viscosity is 1,000 Pa·s or less. Furthermore, it is also because a viscosity maintained at 100 Pa·s or more will serve to prevent the viscosity at the molding temperature from becoming too low, prevent the formation of pits from caused by dragged air during the injection of the resin composition into the reinforcing-fiber base material when molding a fiber-reinforced composite material, and prevent unimpregnated portions to be left due to nonuniform impregnation.

For the present invention, the viscosity of a resin composition etc. can be determined by performing viscosity measurement according to the measuring method using a cone-plate type rotational viscometer as specified in ISO 3219 (1999). Good measuring apparatuses include, for example, TVE-33H, manufactured by Toki Sangyo Co., Ltd.

In addition, a filler may also be included in the resin composition used for the present invention. Such a filler may include, as a component in addition to inorganic carbon, at least one selected from compounds containing silicon, magnesium, calcium, or aluminum. Here, inorganic carbon generically means the constituent carbons in compounds obtained from minerals, and in particular, it refers herein to elementary substances such as diamond and graphite that are in a solid state at room temperature and carbides such as CaC₂ and SiC. On the other hand, materials containing silicon, magnesium, calcium, or aluminum include not only those existing in the form of elementary substances, but also those existing in the form of compounds such as calcium carbonate and aluminum hydroxide. The filler tends to get into interfiber spaces in a carbon fiber base to act to suppress the curing shrinkage during the curing of a resin composition. Good examples include calcium carbonate, aluminum hydroxide, talc, and carbon black.

In particular, particulate talc with an average particle size of 2 to 7 µm as measured by a laser diffraction type particle size distribution measuring apparatus is in the form of particles that are so small in diameter that such talc can easily get into interfiber spaces in a carbon fiber material, thus serving more effectively for shrinkage reduction. The average particle diameter is preferably 3 to 6 µm, and more preferably 3.5 to 5.5 µm. The range may be between either of the aforementioned upper limits and either of the aforementioned lower limits.

The content of the filler is preferably 0.5 to 10 parts by mass relative to 100 parts by mass of the component [A].

In addition, a mold release agent may also be included in the resin composition used for the present invention with the aim of improving the moldability. If a mold release agent that is in a liquid state at 25°C is used, it can be mixed uniformly in an epoxy resin composition that is in a liquid state. If a mold release agent is mixed in the resin, it serves to enhance smooth release between the thermosetting resin composition and the mold 6 used for pultrusion molding, leading to an increased pultrusion moldability.

It is preferable for the mold release agent to account for 0.1 to 8 parts by mass relative to 100 parts by mass of the component [A]. The content is more preferably 0.2 to 6 parts by mass. The range may be between either of the aforementioned upper limits and either of the aforementioned lower limits. If it is less than 0.1 part by mass, a sufficient releasability may not be achieved. On the other hand, if more than 8 parts by mass is added, it is likely to lead to a decreased strength of the resulting molded article itself or a decreased coherence with the coating film of the molded article.

Preferable examples of reinforcing fibers for fiber-reinforced pultrusion molded articles include glass fiber, aramid fiber, polyethylene fiber, silicon carbide fiber, and carbon fiber. In particular, carbon fiber is used preferably because it is light in weight and high in performance and serves to produce fiber-reinforced composite materials with good mechanical property.

Carbon fiber materials are classified into different categories such as polyacrylonitrile based carbon fiber, rayon based carbon fiber, and pitch based carbon fiber. Of these, polyacrylonitrile based carbon fiber, which has high tensile strength, has been used favorably. A polyacrylonitrile based carbon fiber can be produced through, for example, a process as described below. A spinning solution that contains polyacrylonitrile produced from a monomer containing acrylonitrile as primary component is spun by wet spinning, dry-wet spinning, dry spinning, or melt spinning. To produce carbon fiber, the coagulated thread resulting from this spinning step is subjected to a yarn-making step to produce a precursor, which is then subjected to subsequent steps such as flameproofing and carbonization.

The carbon fiber to be used may be in the form of twisted yarns, untwisted yarns, or twistless yarns. In the case of twisted yarns, the filaments in a reinforcing fiber bundle are not parallel and accordingly, the resulting fiber-reinforced composite material will tend to have poor mechanical property. Therefore, untwisted yarns or twistless yarns are used favorably because they can ensure a good balance between the moldability and strength property of the resulting fiber-reinforced composite material.

In the case where carbon fiber is used as reinforcing fiber, it is preferable that each carbon fiber bundle contain 2,000 to 70,000 filaments while the fineness per single yarn be in the range of 50 to 5,000 tex, and more preferably it contains 10,000 to 60,000 filaments while the fineness per single yarn be in the range of 100 to 2,000 tex. The range may be between either of the aforementioned upper limits and either of the aforementioned lower limits. Here, the fineness (tex) refers to the mass per 1,000 m of single yarn (g/1,000 m).

Such carbon fiber preferably has a tensile modulus in the range of 180 to 400 GPa. If the tensile modulus is in this range, it is possible to produce a fiber-reinforced composite material with rigidity, allowing lightweight moldings to be produced. If it is in this range, furthermore, the carbon fiber itself can maintain strength, although the strength of carbon fiber tends to decrease with an increasing elastic modulus. The elastic modulus is more preferably in the range of 200 to 370 GPa, and still more preferably in the range of 220 to 350 GPa. The range may be between either of the aforementioned upper limits and either of the aforementioned lower limits. Here, the tensile modulus of carbon fiber is determined according to JIS R7601-2006.

Commercial products of carbon fiber include Torayca (registered trademark) T300-12000 (tensile strength: 3.5 GPa, tensile modulus: 230 GPa), Torayca (registered trademark) T300B-12000 (tensile strength: 3.5 GPa, tensile modulus: 230 GPa), Torayca (registered trademark) T400HB-6000 (tensile strength: 4.4 GPa, tensile modulus: 250 GPa), Torayca (registered trademark) T700SC-12000 (tensile strength: 4.9 GPa, tensile modulus: 230 GPa), Torayca (registered trademark) T800HB-12000 (tensile strength: 5.5 GPa, tensile modulus: 294 GPa), Torayca (registered trademark) T800SC-24000 (tensile strength: 5.9 GPa, tensile modulus: 294 GPa), Torayca (registered trademark) T830HB-6000 (tensile strength: 5.3 GPa, tensile modulus: 294 GPa), Torayca (registered trademark) T1000GB-12000 (tensile strength: 6.4 GPa, tensile modulus: 294 GPa), Torayca (registered trademark) T1100GC-12000 (tensile strength: 7.0 GPa, tensile modulus: 324 GPa), Torayca (registered trademark) M35JB-12000 (tensile strength: 4.7 GPa, tensile modulus: 343 GPa), Torayca (registered trademark) M40JB-12000 (tensile strength: 4.4 GPa, tensile modulus: 377 GPa) Torayca (registered trademark) M30SC-18000 (tensile strength: 5.5 GPa, tensile modulus: 294 GPa) (all manufactured by Toray Industries, Inc.), PX35-50000 (tensile strength: 4.1 GPa, tensile modulus: 242 GPa) (manufactured by ZOLTEK).

The fiber-reinforced pultrusion molded article according to the present invention may be in any appropriate form selected from various ones as long as it has an identical cross-section shape, and for example, it may be a cylindrical rod-like molded article, rod-like molded article having a polygonal cross-section, sheet-like thin molded article, or thick molded article having a rectangle cross-section and it may also be hollow.

In regard to the state of impregnation with the matrix resin in the fiber-reinforced pultrusion molded article according to the present invention, it is preferable that spaces called voids (portions where resin does not exist) account for 10% by area or less in the resin region when an enlarged image of the cross-section of the molded article is observed by a microscope.

Furthermore, in regard to the state of the cured matrix resin in the fiber-reinforced pultrusion molded article according to the present invention, it is preferable that the glass transition point (Tg1) seen in the first heating run and the glass transition point (Tg2) seen in the second heating run that are examined according to the glass transition point measuring method by differential scanning calorimetry (DSC) specified in ISO 11357-2 satisfy the relation Tg1/Tg2 > 0.8.

### EXAMPLES

The present invention will be illustrated below with reference to examples, but the present invention should not be construed as being limited thereto.

### <Resin material>

The resin materials as listed below were used to prepare resin compositions in the examples. Unless otherwise noted, the contents of the components of the resin compositions given in Table 1 are shown in "parts by weight". The symbol "-" means that the relevant component is absent.

### 1. component [A]: thermosetting resin composition

### (1) epoxy resin composition

(1-1) component [a1]: epoxy resin that is in a liquid state at room temperature
   - Epicion (registered trademark) 830 (bisphenol F type epoxy, manufactured by DIC Corporation)
(1-2) component [a2]: curing agent
   - HN-2200 (methyltetrahydrophthalic acid anhydride, manufactured by Showa Denko Materials Co., Ltd., acid anhydride having an alicyclic structure and being in a liquid state at room temperature)
(1-3) component [a3]: curing accelerator
   - benzyltetraethylammonium chloride (manufactured by FUJIFILM Wako Pure Chemical Corporation)

### (2) vinyl ester resin composition

(2-1) mixture of vinyl ester resin used as the component [b1] and reactive diluent used as the component [b2]
   - Lipoxy (registered trademark) R-804 (52:48 mixture of vinyl ester resin and styrene, manufactured by Showa Denko K.K.)
(2-2) component [b3]: polymerization initiator
   - Perbutyl (registered trademark) A (t-butyl peroxyacetate, manufactured by NOF Corporation)
   - Perhexyl (registered trademark) O (t-hexylperoxy-2-ethyl hexanoate, manufactured by NOF Corporation)

### 2. component [B]: toughness improving agent

- Hypro (registered trademark) 1300X31 CTBN (carboxyl group terminated butadiene-acrylonitrile copolymer, manufactured by Huntsman Advanced Materials, liquid rubber)
- Hypro (registered trademark) 1300X33LC VTBNX (vinyl group terminated butadiene-acrylonitrile copolymer, manufactured by Huntsman Advanced Materials, liquid rubber)
- Kane Ace (registered trademark) MX-136 (25% core shell particle-containing bisphenol F type epoxy resin master batch, core shell particle having diameter of 0.1 µm, manufactured by Kaneka Corporation, core shell particle)

### 3. Other components

### (1) filler

- B-303 (aluminum hydroxide, manufactured by Almorix Ltd.)

### (2) mold release agent

- Chemlease (registered trademark) IC-35 (oleate, manufactured by Chem-Trend)

### <reinforcing fiber>

- PX35-50K (carbon fiber, filament number 50,000, manufactured by ZOLTEK)

### (1) Preparation of thermosetting resin composition

Resin compositions were prepared by mixing components at 25°C according to the proportions specified in Table 1.

### (2) Measurement of viscosity of resin composition

The viscosity of each resin composition was measured at 25°C according to the measurement method using a cone-plate rotational viscometer as specified in ISO3219 (1999). The apparatus used was TVE-33H manufactured by Toki Sangyo Co., Ltd. Here, a rotor of 1°34' × R24 was used and the sample volume was 1 cm³.

### (3) Measurement of glass transition temperature Tg of cured resin

According to the method for glass transition point measurement by differential scanning calorimetry (DSC) specified in ISO11357-2, a resin composition prepared was put in a sample pan and heated twice over the temperature range of 25°C to 250°C at a rate of 10°C/min using Q2000 manufactured by TA Instruments Co., Ltd., and the glass transition point was determined from the step-like changing portion of the DSC curve recorded in the second heating run.

### (4) Measurement of fracture toughness K1c of cured resin

According to ASTM D5045 (test method for plane strain fracture toughness and strain energy release rate of plastic materials), samples for evaluation were prepared from 6 mm thick resin plates prepared from resin compositions and they were subjected to test using a universal testing machine (5565, manufactured by Instron Corporation).

### (5) Bending test of cured resin

According to the method for determination of plastics bending property specified in ISO 178, samples for evaluation (80 mm × 10 mm) were prepared from 4 mm thick resin plates produced from resin compositions and they were subjected to test using a universal testing machine (5565, manufactured by Instron Corporation).

### (6) Preparation of pultrusion molded article

Molding was carried out according to the pultrusion molding procedure illustrated in Fig. 1.

A resin composition was fed to a resin bath 4 maintained at 25°C, and the aforementioned carbon fiber in the form of reinforcing fiber bundles 2 was passed through the resin bath 4 containing the resin composition to perform its impregnation with the resin, and then abrasion was performed by a squeezer 5 to further impregnate the reinforcing fiber bundles 2 with the thermosetting resin composition while removing part of the excess thermosetting resin composition, followed by introducing the resin impregnated fiber base 7, in which the thermosetting resin composition was in a liquid state, through the inlet of the mold. In this introduction step, the thermosetting resin composition was in a liquid state. A pultrusion molded article was discharged from the outlet of the mold.

Described below are molding conditions. The mold conditions used are described below. The mold had a cavity having a surface treated by hard chromium plating and having a rectangle cross-section with a width of 50 mm and a thickness of 2 mm.

- heating temperature Tp (°C) of pultrusion mold 6: 200°C
- length of pultrusion mold 6: 600 mm
- molding speed (mm/min): 200 (mm/min)
Implementation of the molding procedure provided a pultrusion molded article having a width of 50 mm, thickness of 2 mm, and Vf (volume fraction of fiber) of about 70%.

### (7) Bending test of pultrusion molded article

According ISO 14125, a sample for evaluation (100 mm × 15 mm × 2 mm) was prepared from a pultrusion molded article and subjected to test using a universal testing machine (5565, manufactured by Instron Corporation). Here, the sample was cut out so that the reinforcing fibers were parallel to the length direction of the sample for evaluation (0° direction).

### (8) Measurement of interlaminar fracture toughness G1c

Test was performed according to the DCB (double cantilever beam) method specified in ASTM D5528. Two pultrusion molded sheets were used to sandwich glass cloth (areal weight 150 gsm) and TEFLON film (12 µm thick), which was added in the initial crack portion, and adhered with an epoxy resin for adhesion (AUP40T1, manufactured by Sanyu Rec Co., Ltd.) to prepare a sample for evaluation (200 mm × 20 m × 4 mm). It was subjected to test with a universal tester (5565, manufactured by Instron Corporation), and the toughness in the initial stage and that in the propagation stage were determined from the measured relation between load and crack progress length.

### (Example 1)

As specified in Table 1, a resin composition was prepared by mixing 100 parts by mass of EPICLON (registered trademark) 830 as the component [a1], i.e. the epoxy resin that is in a liquid state at room temperature, 97 parts by mass of HN-2200, an acid anhydride having an alicyclic structure and being in a liquid state at room temperature, as the curing agent used as the component [a2], 3 parts by mass of benzyltetraethylammonium chloride as the curing accelerator used as the component [a3], 5 parts by mass of Hypro (registered trademark) 1300X31 CTBN as the toughness improving agent used as the component [B], 0.6 part by mass of B-303 as filler, and 0.4 part by mass of IC-35 as internal mold release agent. This resin composition was found to have a low viscosity and serve to form a cured resin having a sufficiently high heat resistance and good mechanical property (flexural strength, elastic modulus, fracture toughness). Furthermore, this resin composition was found to give a pultrusion molded article having sufficiently good mechanical property (flexural strength, elastic modulus, interlaminar fracture toughness). Results are given in Table 1.

### (Examples 2 and 3)

Except for using 10 parts by mass (Example 2) or 15 parts by mass (Example 3) of Hypro (registered trademark) 1300X31CTBN, the same procedure as in Example 1 was carried out. In both Examples, each resin compositions had a low viscosity and served to form a cured resin having a sufficiently high heat resistance and good mechanical property. In addition, the use of these resin compositions served to give pultrusion molded articles having sufficiently good mechanical property. Results are given in Table 1.

### (Example 4)

Except for using 70 parts my mass of EPICLON (registered trademark) 830 and 40 parts by mass of Kane Ace (registered trademark) MX-136 as toughness improving agent, the same procedure as in Example 1 was carried out. The resulting resin composition had a low viscosity and served to form a cured resin having a sufficiently high heat resistance and good mechanical property. In addition, the use of this resin composition served to give a pultrusion molded article having sufficiently good mechanical property. Results are given in Table 1.

### (Example 5)

Except for using 55 parts my mass of EPICLON (registered trademark) 830 and 60 parts by mass of Kane Ace (registered trademark) MX-136 as toughness improving agent, the same procedure as in Example 1 was carried out. The resulting resin composition had a low viscosity and served to form a cured resin having a sufficiently high heat resistance and good mechanical property although the increase in the resin's fracture toughness compared to Example 4 was small in spite of a large amount of the toughness improving agent. In addition, the use of this resin composition served to give a pultrusion molded article having sufficiently good mechanical property. Results are given in Table 1.

### (Example 6)

According to Table 1, a resin composition was prepared by mixing 100 parts by mass of Lipoxy (registered trademark) R-804, which is a mixture of a vinyl ester resin and styrene, as a mixture of the vinyl ester resin used as the component [b1] and the reactive diluent used as the component [b2], a combination of 1 part by mass Perbutyl (registered trademark) A and 1 part by mass of Perhexyl (registered trademark) O as the polymerization initiator used as the component [b3], 5 parts by mass of Hypro (registered trademark) 1300X33LC VTBNX as the toughness improving agent used as the component [B], 1 part of B-303 as filler, and 0.4 part of IC-35 as internal mold release agent. This resin composition was found to have a low viscosity and serve to form a cured resin having a sufficiently high heat resistance and good mechanical property (flexural strength, elastic modulus, fracture toughness). Furthermore, this resin composition was found to give a pultrusion molded article having sufficiently good mechanical property (flexural strength, elastic modulus, interlaminar fracture toughness). Results are given in Table 1.

### (Example 7)

Except for using 40 parts by mass of Hypro (registered trademark) 1300X31CTBN, the same procedure as in Example 1 was carried out. The resulting cured resin had sufficiently good mechanical property (fracture toughness). In addition, the use of this resin composition served to give a pultrusion molded article having sufficiently good mechanical property (interlaminar fracture toughness). Results are given in Table 1.

### (Comparative example 1)

Except for omitting the inclusion of Hypro (registered trademark) 1300X31CTBN, the same procedure as in Example 1 was carried out. Because the component [B] was not included, the resulting cured resin had a lower fracture toughness as compared with Examples. In addition, the use of this resin composition resulted in a pultrusion molded article having a lower interlaminar fracture toughness as compared with Examples. Results are given in Table 1.

### (Comparative example 2)

Except for omitting the inclusion of Hypro (registered trademark) 1300X33LC VTBNX, the same procedure as in Example 6 was carried out. Because the component [B] was not included, the resulting cured resin had a lower fracture toughness as compared with Examples. In addition, the use of this resin composition resulted in a pultrusion molded articles having a lower interlaminar fracture toughness as compared with Examples. Results are given in Table 1.

### [Table 1]

**[Table 1**

| | | | | | Example 1 | Example 2 | Example 3 | Example 4 | Example 5 | Example 6 | Example 7 | Comparative example 1 | Comparative example 2 |
|---|---|---|---|---|---|---|---|---|---|---|---|---|---|
| resin composition | component [A] thermosetting resin composition | epoxy resin composition | component [a1] epoxy resin in liquid state at room temperature | EPICLON830 | 100 | 100 | 100 | 70 | 55 | - | 100 | 100 | - |
| | | | component [a2] curing agent | HN-2200 | 97 | 97 | 97 | 97 | 97 | - | 97 | 97 | - |
| | | | component [a3] curing accelerator | benzyltetraethylammonium chloride | 3 | 3 | 3 | 3 | 3 | - | 3 | 3 | - |
| | | vinyl ester resin composition | mixture of components [b1] and [b2] | R-804 | - | - | - | - | - | 100 | - | - | 100 |
| | | | component [b3] polymerization initiator | Perbutyl A | - | - | - | - | - | 1 | - | - | 1 |
| | | | | Perhexyl O | - | - | - | - | - | 1 | - | - | 1 |
| | component [B] toughness improving agent | liquid rubber | | 1300X31 CTBN | 5 | 10 | 15 | - | - | - | 40 | - | - |
| | | | | 1300X33LC VTBNX | - | - | - | - | - | 5 | - | - | - |
| | | core shell particle | | MX-136 | - | - | - | 40*¹ | 60*² | - | - | - | - |
| | others | filler | | B-303 | 0.6 | 0.6 | 0.6 | 0.6 | 0.6 | 1 | 0.6 | 0.6 | 1 |
| | | internal mold release agent | | IC-35 | 0.4 | 0.4 | 0.4 | 0.4 | 0.4 | 0.4 | 0.4 | 0.4 | 0.4 |
| property of resin composition and cured product | Viscosity of resin composition at 25°C (mPa·s) | | | | 320 | 490 | 600 | 380 | 465 | 890 | 1160 | 280 | 603 |
| | cured resin Tg (°C) | | | | 116 | 114 | 112 | 118 | 116 | 108 | 100 | 120 | 112 |
| | resin fracture toughness K1c (MPa· m^{1/2}) | | | | 0.91 | 1.21 | 1.52 | 1.48 | 1.50 | 1.10 | 2.43 | 0.71 | 0.85 |
| | flexural strength of resin (MPa) | | | | 133 | 125 | 115 | 126 | 120 | 130 | 75 | 149 | 145 |
| | flexural modulus of resin (GPa) | | | | 3.2 | 3.0 | 2.8 | 3.0 | 2.9 | 3.1 | 1.9 | 3.4 | 3.4 |
| property of pultrusion molded article | flexural strength of pultrusion molded article (GPa) | | | | 1.77 | 1.62 | 1.48 | 1.58 | 1.51 | 1.04 | 0.75 | 1.92 | 1.13 |
| | flexural modulus of pultrusion molded article (GPa) | | | | 141 | 133 | 121 | 130 | 120 | 83 | 71 | 159 | 90 |
| | interlaminar fracture toughness G1c (J/m²) | | | initial | 258 | 304 | 341 | 337 | 339 | 289 | 417 | 218 | 247 |
| | | | | propagating | 475 | 667 | 822 | 804 | 813 | 603 | 1140 | 306 | 428 |

| | | | | | | | | | | | | | |
|---|---|---|---|---|---|---|---|---|---|---|---|---|---|
| *1: Core shell particles account for 10 parts by mass. *2: Core shell particles account for 15 parts by mass. | | | | | | | | | | | | | |

### INDUSTRIAL APPLICABILITY

The fiber-reinforced pultrusion molded article according to the present invention can serve effectively to produce wind turbine blades, building repair and reinforcement members, housings for electrical and electronic devices, bicycles, automobile members, structural materials for sporting goods, aircraft interior materials, boxes for transportation, and the like.

### EXPLANATION OF NUMERALS

- 1: pultrusion molding process
- 2: reinforcing fiber bundle
- 3: creel
- 4: resin bath
- 5: squeezer
- 6: mold for pultrusion molding
- 7: resin impregnated fiber base
- 8: winding machine
- 9: puller

## Claims

1. A fiber-reinforced pultrusion molded article **characterized by** being produced by impregnating a reinforcing fiber bundle assembly containing a plurality of reinforcing fiber bundles bound together with a resin composition containing at least the components [A] and [B] specified below, followed by curing it,
component [A]: thermosetting resin composition, and
component [B]: toughness improving agent.

2. A fiber-reinforced pultrusion molded article as set forth in claim 1, wherein the thermosetting resin composition used as the component [A] is at least one thermosetting resin composition selected from the group consisting of epoxy resin composition, vinyl ester resin composition, unsaturated polyester resin composition, and polyurethane resin composition.

3. A fiber-reinforced pultrusion molded article as set forth in either claim 1 or 2, wherein the toughness improving agent used as the component [B] is at least one toughness improving agent selected from the group consisting of liquid rubber, core shell particle, and rubber particle.

4. A fiber-reinforced pultrusion molded article as set forth in any one of claims 1 to 3, wherein the thermosetting resin composition used as the component [A] is an epoxy resin composition containing at least the components [a1] to [a3] specified below,
component [a1]: epoxy resin that is in a liquid state at room temperature,
component [a2]: curing agent, and
component [a3]: curing accelerator.

5. A fiber-reinforced pultrusion molded article as set forth in claim 4, wherein the component [a1], i.e. the epoxy resin that is in a liquid state at room temperature, is at least one epoxy resin selected from the bisphenol type epoxy resins.

6. A fiber-reinforced pultrusion molded article as set forth in either claim 4 or 5, wherein the curing agent used as the component [a2] of the epoxy resin composition is an acid anhydride having an alicyclic structure and being in a liquid state at room temperature.

7. A fiber-reinforced pultrusion molded article as set forth in any one of claims 4 to 6, wherein the curing accelerator used as the component [a3] of the epoxy resin composition is at least one selected from the group consisting of quaternary ammonium salts, imidazole derivatives, and organic phosphorus compounds.

8. A fiber-reinforced pultrusion molded article as set forth in any one of claims 4 to 7, wherein the curing accelerator used as the component [a3] of the epoxy resin composition accounts for 1 to 10 parts by mass relative to 100 parts by mass of the component [a1].

9. A fiber-reinforced pultrusion molded article as set forth in any one of claims 1 to 3, wherein the thermosetting resin composition used as the component [A] is a vinyl ester resin composition containing at least the components [b1] to [b3] specified below,
component [b1]: vinyl ester resin,
component [b2]: reactive diluent, and
component [b3]: polymerization initiator.

10. A fiber-reinforced pultrusion molded article as set forth in claim 9, wherein the ratio by mass between the vinyl ester resin used as the component [b1] and the reactive diluent used as the component [b2] of the vinyl ester resin composition is 40:60 to 60:40.

11. A fiber-reinforced pultrusion molded article as set forth in either claim 9 or 10, wherein the reactive diluent used as the component [b2] of the vinyl ester resin composition is styrene.

12. A fiber-reinforced pultrusion molded article as set forth in any one of claims 9 to 11, wherein the polymerization initiator used as the component [b3] of the vinyl ester resin composition is an organic peroxide based polymerization initiator.

13. A fiber-reinforced pultrusion molded article as set forth in any one of claims 1 to 12, wherein the toughness improving agent used as the component [B] of the resin composition accounts for 2 to 30 parts by mass relative to 100 parts by mass of the component [A].

14. A fiber-reinforced pultrusion molded article as set forth in any one of claims 1 to 13, wherein the reinforcing fiber is carbon fiber.
